**Europäisches Patentamt**

**European Patent Office**

**Office européen des brevets**

(11) Veröffentlichungsnummer: **0 003 850**
**B1**

# EUROPÄISCHE PATENTSCHRIFT

(45) Veröffentlichungstag der Patentschrift:
14.04.82

(51) Int. Cl.³: **B 60 N 1/12**, B 60 R 21/10, A 47 D 1/10

(21) Anmeldenummer: 79100583.8

(22) Anmeldetag: 27.02.79

(54) **Fahrzeug-Sicherheitssitz für Kinder.**

(30) Priorität: 28.02.78 DE 7806011 U

(43) Veröffentlichungstag der Anmeldung:
05.09.79 Patentblatt 79/18

(45) Bekanntmachung des Hinweises auf die Patenterteilung:
14.04.82 Patentblatt 82/15

(84) Benannte Vertragsstaaten:
BE CH DE GB NL SE

(56) Entgegenhaltungen:
GB-A-1 425 567
US-A-3 948 556
US-A-4 047 755

(73) Patentinhaber: Hegowa B.V., Ambachtstraat 3, Zevenaar (NL)

(72) Erfinder: Kauffmann, Heinz-Joachim,
Breslauerstrasse 50, D-8654 Marktleugast (DE)

(74) Vertreter: Eitel, Alfred, Dr. et al, Patentanwälte Dipl.-Ing.
Dr. Alfred Eitel Dipl.-Ing. Dipl.-Ldw. Ernst Czowalla
Dipl.-Phys. Peter Matschkur Königstrasse 1,
D-8500 Nürnberg (DE)

Fahrzeug-Sicherheitssitz für Kinder

Die Erfindung bezieht sich auf einen Fahrzeug-Sicherheitssitz für Kinder mit in einem Gestellrahmen angeordneten Schalensitz und einem aus verformbarem Kunststoff bestehenden, durch einen Gurt befestigten Fangkörper sowie einer Verstelleinrichtung zwischen Sitz- und Liegeposition.

Derartige Sitze dienen dazu, mitfahrende Kleinkinder, die wegen ihrer Körpermasse nicht mit den handelsüblichen, der Statur von Erwachsenen entsprechenden Abmessungen von Gurtsystemen in Kraftfahrzeugen gegen Aufprallschäden geschützt werden können, einen sicheren Halt zu geben.

Die Sitze sind deshalb so ausgebildet, dass sie einfach auf das Polster in PKW-s eingebauter Einzelsitze oder Sitzbänke aufgesetzt, im Wageninneren befestigt, das Kind hineingesetzt und dann das Kind im Sitz selbst gehalten wird mit Hilfe eines Gurtsystems, das entweder dem Körper des Kindes, beispielsweise im Bereich von Beinen und Schultern anliegt oder besser an einem vor dem Leib des Kindes angeordneten verformbaren Fangkörper angreift, wobei die Verriegelungselemente so weit vom Griffbereich des Kindes entfernt angeordnet sind, dass dieses nicht im Spiel oder auch beabsichtigt seinen Halt im Sitz lösen und damit den Aufprallschutz unwirksam machen kann.

Diese Sitze haben sich wohl gegenüber einfacheren, früheren Ausführungsformen als vorteilhaft erwiesen, jedoch hat sich mittlerweile herausgestellt, dass sie den Erfordernissen der Praxis noch nicht in dem gewünschten Umfang genügen, und dass ihre Gestaltung insbesondere nicht geeignet war, innerhalb der Vorverlagerungswerte zu bleiben, die im Crash-Test als zulässig gelten und die gegenüber den früheren Bestimmungen in ihren Massen wesentlich reduziert sind.

Aus der US-PS 3 948 556 ist ein Fahrzeug-Sicherheitssitz für Kinder bekannt, bei welchem, wie vorstehend beschrieben, der Sitz durch einen Sicherheitsgurt auf der Sitzfläche des Polsters gehalten wird und das Kind im Sitz selbst durch einen Bauchgurt gesichert ist, der über einem abnehmbaren Fangkörper befestigt werden kann.

Die US-PS 4 047 755 beschreibt einen Kindersitz ohne Fangkörper, bei welchem das Kind durch über beide Schultern gehende, sich im Bauchbereich kreuzende und an einem quer über den Bauch verlaufenden Gurt befestigte Gurte gehalten wird. Zur Verstellung dieses Sitzes in verschiedene Kippositionen ist ein Rastmechanismus vorgesehen, der aus einem Längsschlitz und einer Mehrzahl seitlicher, je einen Querabschnitt aufweisender Schlitze besteht, so dass die Raste längs eines solchen Schlitzes unter Belastung nicht ohne weiteres austreten kann.

Damit ist ein weiteres Sicherheitsproblem der vorbekannten Sitze angesprochen, nämlich die besonders bei längerer Fahrt erforderliche Verstellmöglichkeit, die zumindest eine Sitz- und Liegeposition, nach Möglichkeit auch dazwischenliegende Schräglagen für den Schalensitz erlauben sollte.

Der Wechsel zwischen diesen verschiedenen Positionen bedeutet insofern einen Unsicherheitsfaktor, als es bei den vorbekannten Ausführungsformen von Sicherheitssitzen notwendig war, dazu die Gurte zu lösen, was gleichbedeutend mit der vorübergehenden Aufhebung der Schutzwirkung des Sitzes war, es sei denn, man hat bei jeglicher Änderung der Sitzstellung das Fahrzeug angehalten. Auch in dieser Hinsicht war also eine Neugestaltung der Sitze für Kinder unter dem Gesichtspunkt höherer Anforderungen an deren Sicherheit geboten.

Diese Aufgabe wird nun bei Sitzen der eingangs genannten Art erfindungsgemäss dadurch gelöst, dass der Gurt einen durch den Fangkörper hindurchgeführten Fangkörperhaltegurt sowie einen ebenfalls hindurchgeführten Beckensicherheitsgurt aufweist.

Durch diese Massnahmen wird einmal erreicht, dass der auf den Seitenwangen der Sitzschale aufliegende Fangkörper nicht in dem Masse wie bei den zuvor üblichen Sitzformen mit gerader oder leicht abfallender Auflagefläche nach vorn rutscht, sondern vielmehr infolge der Keilwirkung der neugestalteten Seitenwangen des Sitzes ein Abbremsen des Fangkörpers im Falle eines frontalen Aufpralles oder einer starken Geschwindigkeitsverringerung des Fahrzeuges bewirkt wird.

Ferner wird durch die Tatsache, dass nicht mehr nur ein Gurt durch den Fangkörper läuft, sondern stattdessen ein Haltegurt einerseits und ein Beckensicherheitsgurt andererseits vorgesehen sind, erreicht, dass der Verlagerungsweg des Kindes in Fahrtrichtung bei rapider Geschwindigkeitsdrosselung nochmals verkürzt wird, so dass das Ausmass der Vorverlagerung, wie Crash-Versuche mit Testpuppen ergaben, innerhalb der in den Sicherheitsbestimmungen genannten Werte bleiben.

Diese Gurtanordnung bewirkt zusammen mit einer entsprechenden Gestaltung der Schale, dass der Beckengurt im günstigsten Bereich des im Sitz befindlichen Kindes zur Anlage kommt und dieses beim Aufprall zurückhält. Bei dem auftretenden Klappmessereffekt wird das Kind vom Fangkörper gehalten und durch dessen Verformbarkeit die freigewordene Energie abgebaut.

Ergänzt werden die vorgenannten Massnahmen durch die gurtunabhängige Verstell- und Rasteinrichtung, die den Wechsel zwischen verschiedenen Sitzpositionen ohne Öffnen und Schliessen des Gurtes erlaubt und in spezieller Ausgestaltung der Erfindung durch Einhand-Bedienung möglich ist, wobei die Verstell- und Rasteinrichtung für verschiedene Sitzpositionen als Einhand-Bedienung ausgebildet ist. Dabei kann vorgesehen sein, dass die Verstell- und Rasteinrichtung für verschiedene Sitzpositionen aus einer mit Hilfe eines Schwenkbügels betätigbaren, unter Federdruck stehenden Sperrklinke besteht und einem mit Aufnahmenuten versehenen Rastorgan, das am Gestellrahmen befestigt ist. Diese Verstelleinrichtung ist insoweit im vorderen Bereich des Sitzgestellrahmens angeordnet, dass sie für das Kind im Sicherheitssitz nicht zugänglich ist, so dass hierdurch ein weiterer Sicherheitsfaktor gegeben ist.

Weiterhin ist in vorteilhafter Ausgestaltung der Erfindung vorgesehen, dass der Fangkörperhaltegurt und der Beckensicherheitsgurt durch je eine Ausnehmung des Fangkörpers geführt sind, wobei beide Gurte im Abstand von ihren Austrittsöffnungen an den Seitenwangen des Fangkörpers miteinander verbunden und mit Hilfe zweier Verriegelungselemente lösbar mit einem Haltegurt verbindbar sind.

Hierbei kann der Haltegurt vorzugsweise etwa in Beckenhöhe des Sitzbenützers um den Rückenteil des Gestellrahmens herumgeführt und an diesem festgelegt sein, oder aber auch aus zwei mit den Verriegelungselementen verbindbaren Abschnitten bestehen, deren Enden an der Karosserie befestigt sind.

Während der Sitz selbst in an sich bekannter Weise mit Hilfe eines das Basisteil des Gestellrahmens übergreifenden Gurtes an der Fahrzeugkarosserie gehalten ist, sollen in weiterer Ausgestaltung der Erfindung die Seitenwangen des Schalensitzes über den Fangkörper hinaus verlängert sein und an ihren die Beinauflagefläche des Schalensitzes seitlich abschliessenden unteren Enden durch einen als Fussraste dienenden Steg miteinander verbunden sein. Dadurch wird eine mit dem Schalensitz integrierte Abstützfläche für die Füsse des Kindes erhalten und der sichere Halt noch weiter gefördert.

Weitere Merkmale, Einzelheiten und Vorteile der Erfindung ergeben sich anhand der in den Figuren dargestellten Ausführungsbeispiele und deren Beschreibung. Dabei zeigen:

Fig. 1 die perspektivische Darstellung des erfindungsgemässen Sicherheitssitzes,

Fig. 2 die teilweise geschnittene Seitenansicht der Verstell- und Rasteinrichtung,

Fig. 3 die Ausführungsform des Sitzgurtsystems und

Fig. 4 eine abgewandelte Ausführungsform der Sitzgurte.

Der Sicherheitssitz 1 besteht zunächst aus einem Schalensitz 2 mit einer Rückenauflage 3, einer Sitzebene 4, der daran sich anschliessenden Beinauflage 5, wobei die Rückenauflage 3 so weit nach oben gezogen ist, dass sie auch bei grösseren Kindern noch ein Stück über den Kopf hinausragt, damit eine Wirbelsäulenverletzung durch den Peitscheneffekt, wie er durch das Zurückkreisen eines über den Sitz hinausragenden Kopfes entstehen könnte, mit Sicherheit ausgeschlossen ist.

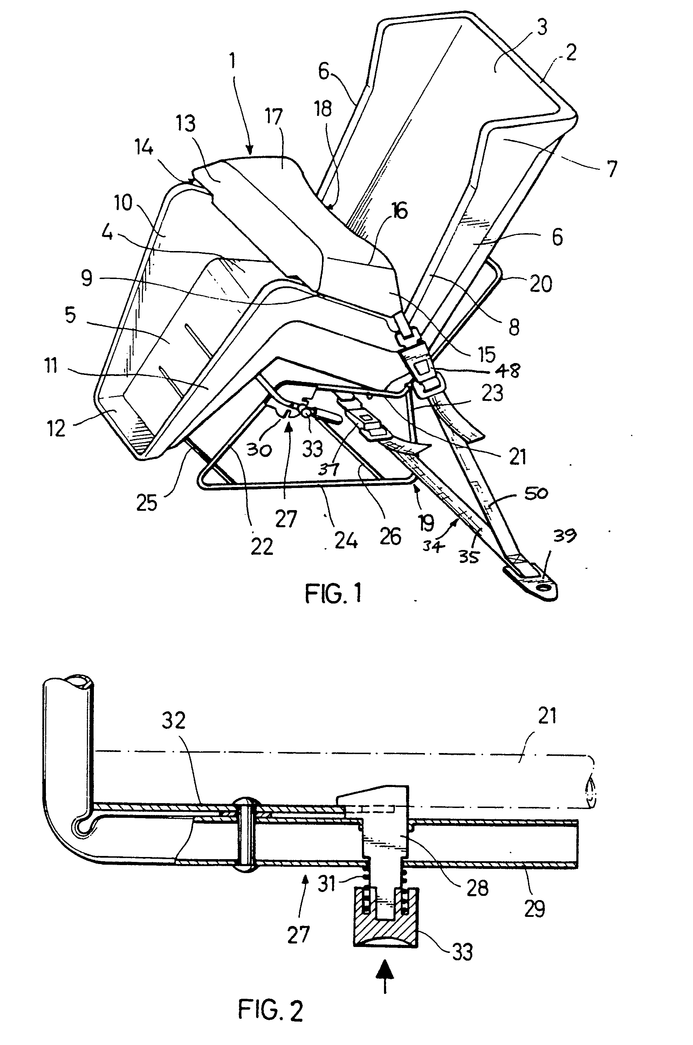

Um einen genügenden seitlichen Halt zu gewährleisten, ist der Schalensitz 2 beiderseits der Rückenauflage 3 etwa rechtwinklig nach vorn abgebogen und bildet die Wangen 6 mit besonders im Bereich des Kopfes ausladenden Abschnitten 7 und anschliessend etwa in Richtung der Längsachse der Rückenauflage 3 abfallenden Kanten 8, bis etwa Hüfthöhe erreicht ist und sich Kanten 9 etwa rechtwinklig zu den Kanten 8 fortsetzen als oberer Abschluss der Seitenwangen 10 des Schalensitzes, die, wie in Fig. 1 deutlich zu erkennen ist, in Fahrtrichtung nach oben ansteigend verlaufen. Die Verlängerung 11 der Seitenwangen 10 dient der seitlichen Begrenzung der Beinauflage 5 und ist an ihrem unteren Ende durch einen Steg 12 verbunden, auf dem sich die Füsse des Kindes abstützen können.

Auf den Kanten 9 der Seitenwangen 10 liegt der aus verformbarem Kunststoff bestehende Fangkörper 13 auf, der zu diesem Zweck an der Unterseite angeordnete Ausnehmungen 14 aufweist. Seine Seitenflächen 15 gehen über abgerundete Kanten 16 in die als Auflage für Spielzeug, Malbücher u. dgl. verwendbare Platte 17 über. Wie Fig. 1 zu entnehmen ist, weist der Fangkörper 13 an seiner dem Leib des Kindes zugewandten Seite eine Einkehlung 18 auf, die zweckmässig etwa der durchschnittlichen Krümmung des kindlichen Körpers entspricht.

Unterstützt wird der Schalensitz 2 von einem Gestellrahmen 19 mit einem U-förmigen Rückenbügel 20, dem Sitzflächenbügel 21, Stützbügel 22, 23, dem Standbügel 24 sowie Querstreben 25 und 26.

An diesem Gestellrahmen 19 ist die Verstell- und Rasteinrichtung 27 für verschiedene Sitzpositionen angebracht. Sie besteht aus einer Sperrklinke 28, die mit Hilfe des Schwenkhebels 29 betätigbar ist und in beispielsweise der Sitz- und Liegeposition entsprechende Nuten 30 eines Rastorgans 32 einrückbar ist, das etwa als Stanzblechteil ausgeführt an den Teilen 21, 22 des Gestellrahmens 19 befestigt ist. Nach dem Eindrücken der Sperrklinke 28 ist der Sitz in dieser Stellung verriegelt. Durch Eindrücken des unter der Wirkung einer Feder 31 stehenden Druckknopfes 33 wird die Sperrklinke 28 nach hinten aus der jeweiligen Nut herausgeführt, die Verriegelung ist offen und der Schwenkhebel 29 und mit ihm der Schalensitz 2 kann in die gewünschte andere Stellung geschwenkt werden. Bei Erreichen dieser neuen Position rastet die federbelastete Sperrklinke automatisch wieder ein und verriegelt diese neu eingenommene Stellung.

Zum Festhalten des auf dem nichtdargestellten Sitzpolster aufgesetzten Gestellrahmens 19 ist ein Gurt 34 vorgesehen, dessen Teile 35, 36 mit Hilfe des Steckschlosses 37 lösbar miteinander verbunden und über Laschen 38, 39 im Wageninneren befestigt sind.

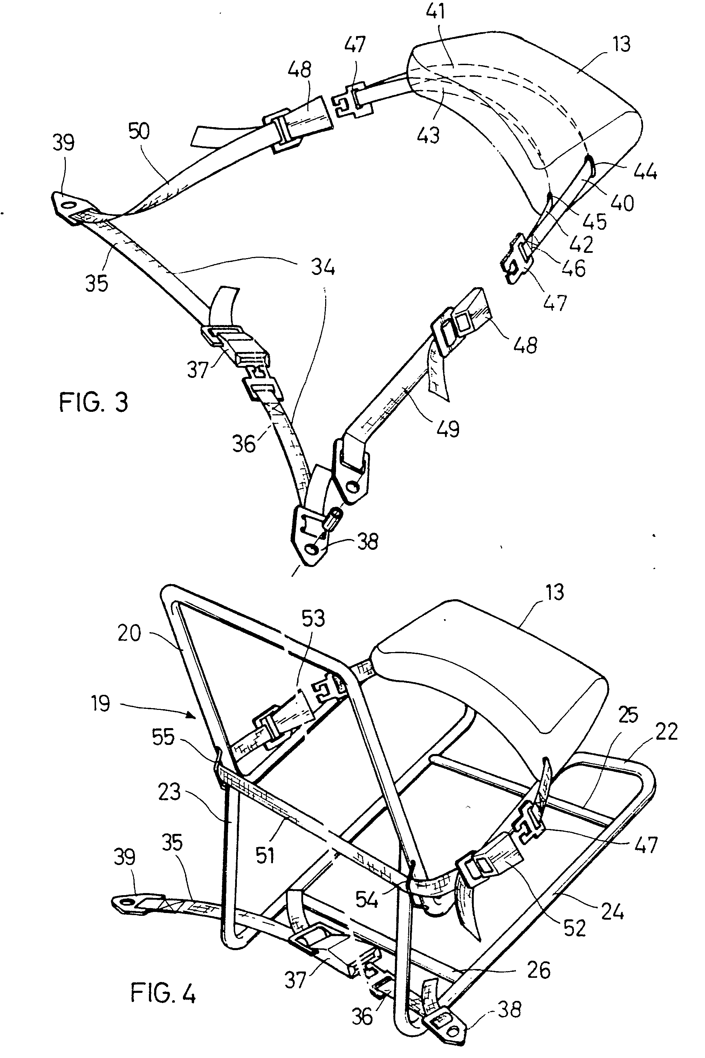

Das eigentliche, dem Halt des Kindes dienende Sicherheitsgurtsystem besteht nach Fig. 3 aus einem Fangkörperhaltegurt 40, der durch eine Ausnehmung 41 im Fangkörper geführt ist sowie einem Beckensicherheitsgurt, dessen Teil 42 durch eine andere Ausnehmung 43 im Fangkörper 13 geführt ist. Unweit ihrer Austrittsöffnungen 44, 45 am Fangkörper 13 sind die Gurtabschnitte 40 und 42 bei 46 miteinander verbunden und in das Steckschlosselement 47 geführt.

Das Gegenstück 48 dieses Steckschlosselementes 47 bildet das eine Ende zweier Abschnitte 49, 50 des Beckensicherheitsgurtes, deren andere Enden ebenso wie der Gurt 34 an der Fahrzeugkarosserie festgelegt sind.

Dagegen ist bei der in Fig. 4 dargestellten Ausführungsform ein einstückiger Beckensicherheitsgurt 51 vorgesehen, der über die Steckschlösser 52, 53 lösbar mit den Gurten 40, 42 verbindbar, um den Rückenbügel 20 des Gestellrahmens 19 herumgeführt und mit Hilfe von Bügeln 54, 55 in einer bestimmten Höhe gehalten ist.

**Patentansprüche**

1. Fahrzeug-Sicherheitssitz für Kinder mit einem in einem Gestellrahmen (19) angeordneten Schalensitz (2) und einem aus verformbarem Kunststoff bestehenden, durch einen Gurt (34) befestigten Fangkörper (13), dadurch gekennzeichnet, dass der Gurt (34) einen durch den Fangkörper (13) hindurchgeführten Fangkörperhaltegurt (40) sowie einen ebenfalls hindurchgeführten Beckensicherheitsgurt (42) aufweist.

2. Fahrzeug-Sicherheitssitz nach Anspruch 1, dadurch gekennzeichnet, dass der Fangkörperhaltegurt (40) und der Beckensicherheitsgurt (42) durch je eine Ausnehmung (41, 43) des Fangkörpers (13) geführt sind.

3. Fahrzeug-Sicherheitssitz nach Anspruch 1 oder 2, dadurch gekennzeichnet, dass der Fangkörperhaltegurt (40) und der Beckensicherheitsgurt (42) im Abstand von Austrittsöffnungen (44, 45) an den Seitenwangen des Fangkörpers (13) miteinander verbunden und mit Hilfe zweier Verriegelungselemente (47, 48) lösbar mit einem Haltegurt (49, 50, 51) verbindbar sind.

4. Fahrzeug-Sicherheitssitz nach Anspruch 3, dadurch gekennzeichnet, dass der Haltegurt (51) vorzugsweise etwa in Beckenhöhe des Sitzbenützers um einen Rückenbügel (20) des Gestellrahmens (19) herumgeführt und an diesem festgelegt ist.

5. Fahrzeug-Sicherheitssitz nach Anspruch 3, dadurch gekennzeichnet, dass der Haltegurt aus zwei mit den Verriegelungselementen (47, 48) verbindbaren Abschnitten (49, 50) besteht, deren Enden an der Fahrzeugkarosserie befestigbar sind.

6. Fahrzeug-Sicherheitssitz nach einem der Ansprüche 3 bis 5, dadurch gekennzeichnet, dass der Sitz mit Hilfe eines einen Standbügel (24) des Gestellrahmens (19) übergreifenden Gurtes (34) an der Fahrzeugkarosserie fixierbar ist.

7. Fahrzeug-Sicherheitssitz nach einem der Ansprüche 1 bis 6, dadurch gekennzeichnet, dass die Seitenwangen (10) des Schalensitzes (2) über den Fangkörper (13) hinausragend in Fahrtrichtung verlängert sind und an ihrem eine Beinauflagefläche (5) des Schalensitzes (2) seitlich abschliessenden unteren Ende durch einen als Fussraste dienenden Steg (12) miteinander verbunden sind.

8. Fahrzeug-Sicherheitssitz nach einem der Ansprüche 1 bis 7 mit einer von dem Gurt (34) unabhängigen Verstell- und Rasteinrichtung (27) für verschiedene Sitzpositionen, dadurch gekennzeichnet, dass die Verstell- und Rasteinrichtung (27) für verschiedene Sitzpositionen als Einhand-Bedienung (28, 29, 32, 33) ausgebildet ist.

9. Fahrzeug-Sicherheitssitz nach Anspruch 8, dadurch gekennzeichnet, dass die Verstell- und Rasteinrichtung (27) für verschiedene Sitzpositionen aus einer mit Hilfe eines Schwenkbügels (29) betätigbaren, unter Federdruck stehenden Sperrklinke (28) besteht und einem mit Aufnahmenuten (30) versehenen Rastorgan (32), das am Gestellrahmen (19) befestigt ist.

**Claims**

1. A vehicle safety seat for a child, comprising a seat shell (2) arranged in a mounting frame (19) and a constraining member (13) consisting of deformable synthetic plastics material and secured by means of a strap (34), characterised in that the strap (34) comprises a holding strap (40) for the constraining member, which extends through the constraining member (13) in addition to a pelvic safety belt (42) which likewise extends through the constraining member.

2. A vehicle safety seat according to claim 1, characterised in that the holding strap (40) for the constraining member and the pelvic safety belt (42) are each lead through a corresponding opening (41, 43) of the constraining member (13).

3. A vehicle safety seat according to claim 1 or 2, characterised in that the holding strap (40) for the constraining member and the pelvic safety belt (42) are connected with one another at a spacing from exit openings (44, 45) in the lateral sides of the constraining member (13) and are releasably connectable with a holding strap (49, 50, 51) with the aid of two locking elements (47, 48).

4. A vehicle safety seat according to claim 3, characterised in that the holding strap (51) is lead around, and fastened to, a back-frame (20) of the mounting frame (19), preferably approximately at the level of the pelvis of the occupant of the seat.

5. A vehicle safety seat according to claim 3, characterised in that the holding strap consists of two sections (49, 50) connectable with the locking elements (47, 48), and the ends of which are securable to the body work of the vehicle.

6. A vehicle safety seat according to one of claims 3 to 5, characterised in that the seat is securable to the body of the vehicle with the aid of strap (34) engaging over a base portion (24) of the mounting frame (19).

7. A vehicle safety seat according to one of claims 1 to 6, characterised in that the lateral cheeks (10) of the seat shell (2) are extended forwardly from the constraining member (13) in the direction of travel and are connected with one another at their lower ends, which laterally enclose a leg supporting surface (5) of the seat shell (2), by means of a flange (20) which forms a foot rest.

8. A vehicle safety seat according to one of claims 1 to 7 having an adjustment and latching arrangement (27) for several seat positions, which is independant of the strap (34), characterised in that the adjustment and latching arrangement (27) for various seat positions is constructed for one handed operation (28, 29, 32, 33).

9. A vehicle safety seat according to claim 8 characterised in that the adjustment and latching arrangement (27) for different seat positions comprises a spring loaded locking latch (28) which is actuatable with the aid of a pivoted handle (29) and a locating member (32) which is fastened to the mounting frame (19) and is provided with locking recesses (30).

**Revendications**

1. Siège de véhicule de sécurité pour enfants, avec un siège en forme de coque (2) disposé dans un bâti formant berceau (19) et avec un corps d'arrêt (13) fait de matière synthétique déformable, fixé au moyen d'une sangle (34), caractérisé en ce que la sangle (34) comporte une sangle de maintien du corps d'arrêt (40), passant à travers le corps d'arrêt (13), ainsi qu'une sangle de sécurité pour le bassin (42), passant également au travers.

2. Siège de véhicule de sécurité suivant la revendication 1, caractérisé en ce que la sangle de maintien du corps d'arrêt (40), et la sangle de sécurité pour le bassin (42), passent à travers chaque fois un évidement (41, 43) du corps d'arrêt (13).

3. Siège de véhicule de sécurité suivant la revendication 1 ou la revendication 2, caractérisé en ce que la sangle de maintien du corps d'arrêt, (40), et la sangle de sécurité pour le bassin (42), sont reliées l'une à l'autre à distance des ouvertures de sortie (44, 45) aux faces latérales du corps d'arrêt (13) et peuvent être reliées de manière détachable, à l'aide de deux éléments de verrouillage (47, 48), à une sangle de retenue (49, 50, 51).

4. Siège de véhicule de sécurité suivant la revendication 3, caractérisé en ce que la sangle de retenue (51) est amenée de préférence à peu près à hauteur du bassin de l'utilisateur du siège, autour d'un dossier (20) du bâti formant berceau (19), et est maintenue sur celui-ci.

5. Siège de véhicule de sécurité suivant la revendication 3, caractérisé en ce que la sangle de retenue consiste en deux tronçons (49, 50) qui peuvent être reliés aux éléments de verrouillage (47, 48), dont les extrémités peuvent être fixées à la carrosserie du véhicule.

6. Siège de véhicule de sécurité suivant les revendications 3 à 5, caractérisé en ce que le siège peut être fixé à la carrosserie du véhicule à l'aide d'une sangle (34) embrassant l'étrier de pose (24) du bâti formant berceau (19).

7. Siège de véhicule de sécurité suivant les revendications 1 à 6, caractérisé en ce que les faces latérales (10) du siège en forme de coque (2) sont prolongées, dans la direction de la marche, au-delà du corps d'arrêt (13) et sont reliées l'une à l'autre à leur extrémité inférieure, définissant une surface d'appui pour les jambes (5), par une traverse (12) servant de butée pour les pieds.

8. Siège de véhicule de sécurité suivant l'une des revendications 1 à 7, avec un dispositif (27) de réglage et d'arrêt indépendant de la sangle (34) pour différentes positions du siège, caractérisé en ce que le dispositif (27) de réglage et d'arrêt est conformé en dispositif de manoeuvre à une main (28, 29, 32, 33) pour différentes positions du siège.

9. Siège de véhicule de sécurité suivant la revendication 8, caractérisé en ce que le dispositif (27) de réglage et d'arrêt pour différentes positions du siège consiste en un loquet d'arrêt (28) soumis à l'action d'un ressort, actionnable à l'aide d'un étrier à pivotement (29), et en un organe d'arrêt (32) pourvu de rainures réceptrices (30), qui est fixé au bâti formant berceau (19).

FIG. 1

FIG. 2

FIG. 3

FIG. 4